(19)

Europäisches
Patentamt
European
Patent Office
Office européen
des brevets

(11) **EP 4 579 545 A1**

(12) **EUROPEAN PATENT APPLICATION**

(43) Date of publication:
**02.07.2025   Bulletin 2025/27**

(21) Application number: **23383395.3**

(22) Date of filing: **28.12.2023**

(51) International Patent Classification (IPC):
**G06Q 10/04** (2023.01)      **G06Q 10/0631** (2023.01)
**G06Q 50/02** (2024.01)      **A01G 9/24** (2006.01)
**G05D 3/00** (2006.01)

(52) Cooperative Patent Classification (CPC):
**G06Q 50/02; F24S 50/20; G06Q 10/04;**
**G06Q 10/0631;** A01G 7/00; A01G 9/243;
G05D 3/00; H02S 20/30

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Soltec Innovations S.L.**
**30500 Molina de Segura Murcia (ES)**

(72) Inventor: **Guerrero Pérez, Javier**
**Murcia (ES)**

(74) Representative: **Pons**
**Glorieta Rubén Darío 4**
**28010 Madrid (ES)**

(54) **METHOD TO DETERMINE AN ORIENTATION ANGLE FOR SOLAR PANELS IN CROP FIELDS**

(57)    The present invention relates to a method to determine an optimal orientation angle for solar panels located in crop fields, comprising the steps of calculating producible electrical energy; calculating an irradiance level on the crop; determining an optimisation function that is a linear combination of the values of instantaneous and accumulated producible electrical energy and producible mass, weighted with a weighting coefficient that determines a degree of priority of crop production or solar production; determining an optimal orientation angle by maximising the optimisation function and establishing the condition that the irradiance on the crop is less than the crop irradiance limit; and applying the calculated orientation angle.

**FIG. 1**

EP 4 579 545 A1

**Description**

**OBJECT OF THE INVENTION**

The invention relates to the field of orientation control of solar panels. In particular, the invention relates to the orientation control of solar panels located in fields with agricultural activity.

The object of the invention is a method and a system for orienting solar panels installed on land with fields with agricultural activity. The method and the system of the invention allow determining an optimal orientation angle of the solar panels, balancing their production with that of agricultural production.

**STATE OF THE ART**

The state of the art has several solutions for controlling the orientation of solar panels.

Solutions that combine the use of solar panels for producing photovoltaic energy with crops that share the space of the panels have also been found in the state of the art. In these cases, controlling the orientation of the panels can be more complex if crop production must also be considered.

In some systems of this type, the solar panels are suspended above agricultural land and supported by vertical supports. In these cases, the position of the panels can be adjusted by using panel orientation systems.

Some solutions include devices for monitoring the amount of solar energy generation and some parameters of crop growth and development. In some cases, models have even been proposed to balance the amount of system energy generation with crop production.

In this regard, some developments have been made that allow a decision to be made on the angle of the solar panel relative to solar incidence, taking into account the sun and shade requirements of the plants under the panels and taking into account the requirements for generating electrical energy in the panels.

However, no methods for controlling the orientation angle that allow precisely balancing or alternating the priority of solar and agricultural production in an operating period have been found in the state of the art.

**DESCRIPTION OF THE INVENTION**

The present invention relates to a method to determine an optimal orientation angle for solar panels installed on land with crop fields, such that the crop can be under the solar panels, between rows of solar panels or integrated into the very support structure of the panels.

The orientation angle of a solar panel can be controlled with a photovoltaic tracking system, which allows the panels to be rotated to change the orientation angle. Traditionally, solar panels are oriented to maximize irradiance in the plane of the panels and, therefore, their electrical production. However, changing the orientation of the panels has an impact on the irradiance that reaches the plants grown on the ground, under said panels or between the rows of solar trackers.

Therefore, the invention presents a method to determine an optimal orientation angle for solar panels located in crop fields.

The method of the invention allows determining the optimal orientation angle of the solar panels to balance both the performance of the agricultural operation and the performance of the photovoltaic installation. To do so, it considers long-term or historical variables, with which it establishes a priority criterion for the solar installation over the crop, or for the crop over the solar installation.

The method of the invention also considers instantaneous variables, such as irradiance, biological limits or electricity prices, to determine the optimal orientation angle to balance solar and agricultural production in accordance with a previously established criterion.

The method of the invention comprises a step of calculating producible electrical energy in the solar panels. To do so, weather forecast data, solar position data, peak power of the plant, an ambient temperature and a temperature coefficient of the solar panels are obtained.

Next, direct irradiance on the solar panels, rear irradiance and diffuse irradiance are determined. To do so, solar irradiance is simulated for a set of panel angles using known techniques.

An estimate of producible electrical energy for each angle is then determined by using a known function. Preferably, the estimate of producible electrical energy is carried out using the expression:

$$\overline{E(Db)} = Pp \cdot \left( \overline{POA\,(Db)} + BIF \cdot \overline{GRI(Db)} \right) \cdot \left( 1 - cofT \cdot (T - 25) \right) \cdot \Delta t$$

where $Pp$ is peak plant power, $\overline{POA}$ is the global irradiance on the front surface of the solar panel, $BIF$ is a parameter that depends on the bifaciality of the solar panel, $\overline{GRI}$ is the global irradiance on the rear surface of the solar panel, $cofT$ is a thermal coefficient of the solar panel, $T$ is the measured temperature and $\Delta t$ is the period of time that is analysed. If the solar panels are monofacial, the parameter $BIF$ takes the value 0.

The method of the invention also comprises a step of calculating a producible mass in the crop.

To do so, humidity and temperature measurements are obtained in the crop areas. Furthermore, a biological state of the crop and a crop irradiance limit are determined. To do so, biological indicators commonly used in agriculture are used. In general, the relevant markers will depend on the type of crop used. For example, the most common markers are: the leaf area index, the stomatal index and the content of photosynthetic compounds. In other cases, a marker may be the content of phenolic compounds, net assimilation ratio, etc.

The crop areas are then divided into a set of strips, and shaded strips and unshaded strips are determined through a simulation for a set of panel angles. An irradiance level for each strip is then determined through the simulation for a set of panel angles. Data on ground albedo and reflections on the panels can be included in this simulation. The method of the invention increases accuracy in determining the optimal orientation angle by taking into account the reflected irradiance to estimate crop growth.

Next, a crop yield curve is determined for each strip, establishing the humidity level and the biological state of the crop. The crop yield curve is used to determine a producible mass in each strip for a set of panel angles. For each type of crop, the crop yield curve correlates the increase in biological mass with the irradiance received, taking ground moisture into account.

The method below comprises a step of determining an optimization function that is a linear combination of the following variables and parameters: the values of instantaneous and accumulated producible electrical energy and producible mass, weighted with a weighting coefficient $C_i$ that determines a degree of priority of crop production or solar production. Preferably, determining the optimisation function comprises determining the values of the defined variables and parameters.

Preferably, 5 weighting coefficients $C_i$ that assign weightings are set: instantaneous electrical production ($C_1$), accumulated electrical production ($C_2$), homogeneity of the crop ($C_3$), instantaneous production of the crop ($C_4$) and accumulated production of the crop ($C_5$).

An optimal orientation angle is then determined by maximising the optimisation function and establishing the condition that irradiance on the crop is less than the crop irradiance limit. Finally, the determined orientation angle is applied.

In some embodiments, the method of the invention comprises a step of introducing an expected value of producible electrical energy or an expected value of producible mass in the crop, so that the values of the weighting coefficients that allow balancing the solar and agricultural production based on said previously established criterion can be determined. To do so, the value of the weighting coefficients can be varied iteratively until said expected values of producible electrical energy or expected value of producible mass in the crop are reached.

The method of the invention thus allows introducing a decision criterion with time evolution to prioritize electrical or agricultural production. In this way, confidence in the prediction of agricultural and photovoltaic production increases, and the impact caused by changing the orientation angle of the solar panels is determined with greater accuracy to favor the coexistence of two different productive activities in the same space.

Furthermore, the method of the invention allows the photovoltaic installation to protect the crop from biological damage due to excessive irradiance, including future events based on the weather forecast.

Likewise, given the method of the invention, irradiance above biological limits is used for solar production at all times, which has a smaller impact on the generation of biological mass.

Thus, the method makes it possible to use the photovoltaic installation, i.e., the solar panels, to increase the production and quality of the crop in a quantified manner. Furthermore, by knowing the penalty for the crop, the weighting coefficients Ci can be adjusted to adapt to a previously established criterion.

Furthermore, the method of the invention may comprise a step of performing thermal modelling to avoid heat stress on the crops, changing the orientation angle of the panels to cast shade on the crops when the temperature exceeds a previously set limit value.

The method of the invention allows optimal use of irradiance based on the majority wavelengths that favor crop growth and are more efficient for the photovoltaic plant. To do so, the spectrum of sunlight is divided into three strips: the red and infrared range, the green range and another range for blue and ultraviolet wavelengths. The method considers the wavelength composition of irradiance and discriminates between photovoltaic production and the crop, favoring the one that generates the best yield for the harvest.

In particular, irradiance with a greater content of longer wavelengths increases the priority of photovoltaic production, while the priority of the crop increases when there are short wavelengths.

The method of the invention may also comprise the steps of:

- calculating a growth difference between each of the strips, determining a difference between the producible mass in each strip and an accumulated historical value (MRBIO) in each strip, and

- determining a heterogeneity exponent based on the growth difference and a previously determined heterogeneity priority.

The heterogeneity priority is previously selected by the user where it is determined whether priority is to be given to producible electrical energy, to producible mass in the crop or to both.

In this case, the method may further comprise a step of determining a range of imbalances for each angle, where said range of imbalances is defined as the sum of the growth differences raised to the heterogeneity exponent.

This feature of the method of the invention makes it possible to balance crop production in different areas or portions of ground, balancing the irradiance it receives.

The invention also relates to an orientation control system for solar panels located in crop fields that comprises a set of solar panels located over a crop, a set of actuators connected to the solar panels to change their orientation, and a processing module configured to carry out the steps of the method of the invention and determine the optimal orientation angle of the panels.

The processing module is connected to the actuators, so that the calculated optimal angle is sent to the actuators that position the panels at that orientation angle.

The system of the invention may also comprise one or more sensors to obtain data from the solar panels and the crop, said sensors selected from: solar position sensors, peak plant power sensors, temperature sensors, humidity sensors and irradiance sensors.

The invention also relates to a computer program configured to be run by the processing module of the system of the invention and configured to carry out the steps of the described method.

Another object of the invention is a computer-readable storage medium comprising the computer program.

## DESCRIPTION OF THE FIGURES

Figure 1 shows an exemplary embodiment of a solar panel located over crops.

Figure 2 shows an exemplary embodiment of a crop yield curve.

Figure 3 shows an exemplary embodiment of dividing the spectrum of sunlight into different ranges to direct them to the solar panels and to the crop.

Figure 4 shows an exemplary embodiment of a photosynthesis and temperature curve to determine the irradiance and temperature limits of a crop.

## PREFERRED EMBODIMENTS OF THE INVENTION

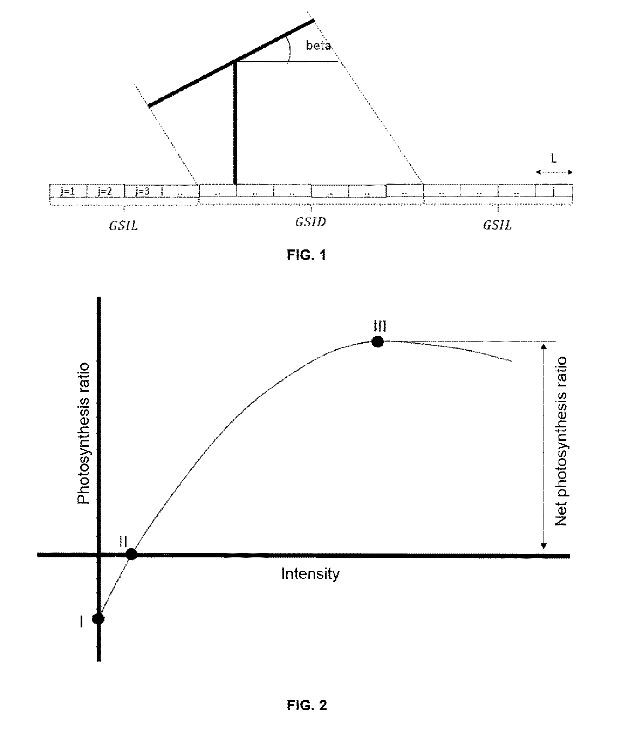

The invention relates to a method to determine an optimal orientation angle for solar panels located in crop fields, such as that shown in figure 1.

In an embodiment of the method of the invention, on the one hand, the producible electrical energy is calculated with the weather forecast, solar position and taking into account the reflected rear energy for a period ($\Delta t$), over a range of angles of the solar panel ($\Delta \beta$) relative to the oriented position, obtaining the electrical production for the period (EPV). This calculation also considers the shade produced by other solar panels. The hourly cost of electricity is applied to this production, determining the instantaneous production factor of the photovoltaic installation (PIPV).

Next, economic production accumulated during the year is compared with the expected economic production, in addition to the variation of introducing the production PIPV for the period ($\Delta t$), over a range of angles of the solar panel ($\Delta \beta$) relative to the oriented position, determining the accumulated photovoltaic production factor (PAPV).

Furthermore, the irradiance that reaches the crop on the ground or vertically is calculated, distinguishing the global irradiance in the shaded area (GSID) or in the non-shaded area (GSIL).

The area where the crop is located is divided into strips of distance $d_{crop}$, and the irradiance that reaches each of these areas is calculated for the period ($\Delta t$), over a range of angles of the solar panel ($\Delta \beta$).

By introducing a yield curve (PAR) of the crop in each strip, such as the one shown in figure 2, the amount of mass produced per strip can be obtained.

The photosynthesis ratio is represented as a function of intensity on this curve. Moreover, the following relevant points are shown: respiration limit (I), compensation point (II) and saturation or photostress point (III).

Next, the quantity of each strip can be added and multiplied by the price of the crop to obtain a biological production factor for the period (PIBIO).

Then, economic production accumulated during the year is compared with the expected economic production, in addition to the variation of introducing the production (PIBIO) for the period ($\Delta t$), over a range of angles of the solar panel ($\Delta \beta$) relative to the oriented position, thus determining an accumulated biological production factor (PABIO).

Next, biological production accumulated during the year for each strip is compared with the average expected production for the period, and a deviation penalty coefficient is established for each strip. A biological homogeneity factor (PHBIO) is obtained by adding the deviation penalty coefficients.

Then, a productivity factor (P) is calculated for the period ($\Delta t$), over a range of angles of the solar panel ($\Delta \beta$), as the linear combination of the calculated factors to which a weight $C_i$ is assigned.

An optimal deviation angle is then calculated relative to the oriented position, maximising the value of the highest productivity factor (P).

The invention also relates to a photovoltaic tracking system that comprises the set of solar panels and a set of actuators connected to the solar panels in order to orient them according to the calculated optimal deviation angle. Preferably, the system calculates the orientation angle of the panels based on the optimal deviation angle using a standard tracking algorithm and applies said optimal orientation angle.

In preferred embodiments, the method of the invention is implemented by an algorithm that generally comprises the steps of:

a) For each time period ($\Delta t$) (i.e. 15 min), the deviation from the electrical production of the photovoltaic installation is determined for a range of angles (Db), both in instantaneous terms of kW (PIPV) and in kWh with respect to a preselected expected value (PFPV).

b) The irradiance that reaches the crop is assessed for a range of angles (Db). There are several scenarios in which the crop shades the panels, the panels shade the crop, nothing is shaded and the ground captures abundant irradiance, etc. At this point, agricultural production in the period is assessed in terms of the amount of biomass (MBIO), the sales price of the crop is incorporated, and it is compared with the expected accumulated economic production. A weighted balance of the deviations in the different areas of the crop is also established, providing a parameter that tends to balance or unbalance the ripening phases of the different areas with respect to a predicted or expected value.

c) 5 factors or parameters (C1 to C5) are determined which, through their weighting, indicate the convenience of favoring the productivity of the crop or of the solar installation in each period, so that the annual accumulation is close to what is expected, allowing the photovoltaic installation or agricultural production to be prioritized or the economic performance of the two exploitations as a whole be maximized.

d) Finally, to determine an optimal angle for each period, a deviation angle relative to the oriented angle ($\Delta \beta$) that is added to the oriented angle at each instant is determined. The system of the invention keeps the solar panel oriented at said optimal angle.

To estimate production for the period, the weather forecast and, possibly, measurements taken on the crop (i.e., air temperature, ground moisture, etc.) are used. The method of the invention allows assessing the impact of each scenario on the crop, as well as the economic income from the sale of electricity at the market price at that time.

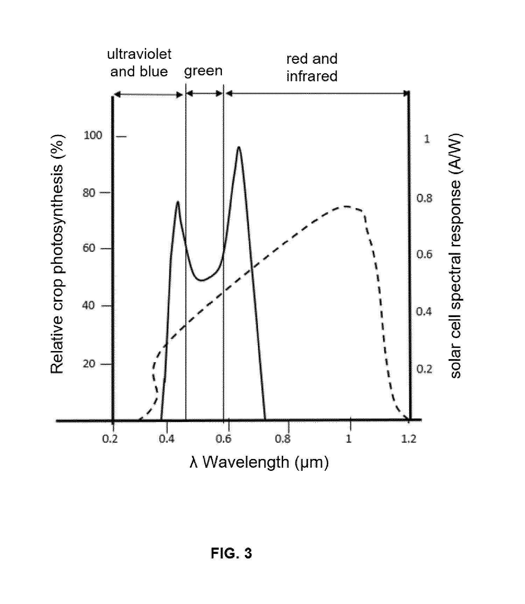

Figure 3 shows the response of the crop's photosynthetic activity to the radiation spectrum, as well as the photovoltaic effect of the solar cell, separated by different wavelength ranges. The response of photosynthesis to the radiation spectrum depends on the content of photosynthetic pigments in the crop (chlorophylls, carotenes, xanthophylls, anthocyanins and phycobilins). Each of these pigments photosynthesises an area of the spectrum. For this reason, the curve also varies with the biological phase that the crop is in (growth, flowering, ripening).

The response of photosynthesis is preferably associated with an area of the spectrum. Irradiance with a greater content of longer wavelengths, which makes better use of the solar cell, tends to favor the solar installation, while it tends to favor the crop when there are short wavelengths.

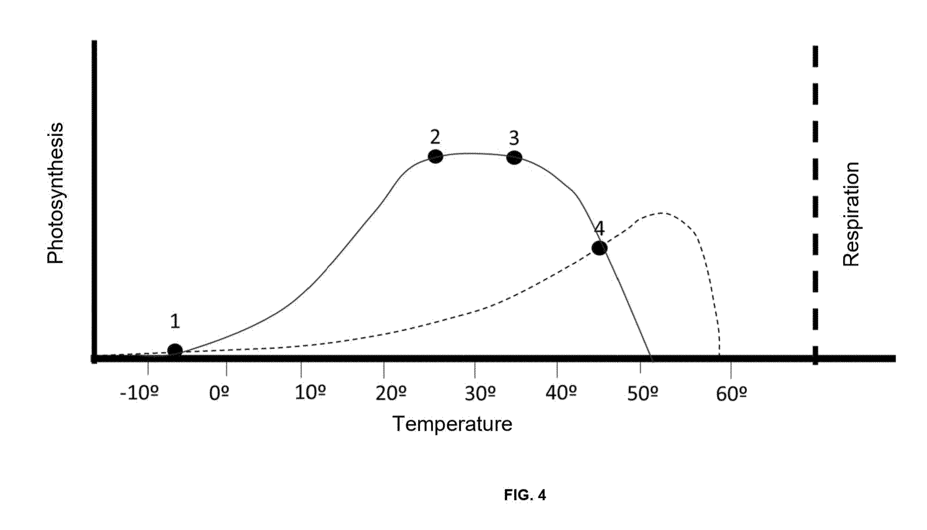

Moreover, a limit condition can be established such that, if a lethal irradiance limit for the crop is exceeded for any angle, the crop is prioritized. Otherwise, when the biological limits of the crop are not exceeded, the panels can be oriented at the optimal angle that balances both forms of production. The biological limits of the crop can be determined from a curve known in the state of the art such as the one shown in figure 4.

On this curve, the curve representing photosynthesis as a function of temperature is shown with a solid line and respiration versus temperature is shown with a dashed line. Moreover, the following points are identified: cold limit (1), optimal temperature point (2), critical temperature point (3) and heat limit (4).

A detailed description of the method of the invention for a specific case of application is presented below. In this case, the method of the invention comprises the steps of:

1. Generating a range of possible angles for the solar panels ($\beta_i$) calculated as variations relative to the current orientation position ($\theta$)

$$\overline{Db} = \begin{pmatrix} theta - 90 \\ theta - 89 \\ theta - 88 \\ .. \\ .. \\ theta + 90 \end{pmatrix} = \begin{pmatrix} beta_1 \\ beta_2 \\ beta_3 \\ .. \\ .. \\ beta_i \end{pmatrix}$$

2. Calculating an estimated irradiance in the frontal plane of each solar panel based on the global horizontal irradiance (GHI) and the diffuse horizontal irradiance (DHI) estimated in the period, for each of the possible angles ($\beta_i$). In this case, it is calculated using a function $f_a$ which is a geometric function known in the sector. Thus, a range of possible irradiances is obtained based on the different ($\beta_i$).

$$POA(beta_i) = f_a(GHI, DHI, \beta_i)$$

$$\overline{POA(Db)} = \begin{pmatrix} POA(beta_1) \\ POA(beta_2) \\ POA(beta_3) \\ .. \\ .. \\ POA(beta_i) \end{pmatrix}$$

3. Calculating a rear irradiance (GRI) on each solar panel based on estimated global horizontal irradiance (GHI) and diffuse horizontal irradiance (DHI) based on the weather forecast, for each possible angle of the range. To do so, the dimensions of the solar panel and ray-tracing techniques or similar are modelled. An estimate of the albedo calculated by a simulation can also be included in the calculation of the rear irradiance (GRI).

$$GRI(beta_i) = f_b(GHI, DHI, \beta_i, albedo)$$

$$\overline{GRI(Db)} = \begin{pmatrix} GRI(beta_1) \\ GRI(beta_2) \\ GRI(beta_3) \\ .. \\ .. \\ GRI(beta_i) \end{pmatrix}$$

4. Estimating an amount of electrical energy produced for each possible angle ($\beta_i$), taking into account an ambient temperature obtained from the weather forecast, peak power of the plant and a temperature coefficient of the module for the time period ($\Delta t$).

$$\overline{E(Db)} = Pp \cdot \left( \overline{POA(Db)} + BIF \cdot \overline{GRI(Db)} \right) \cdot \left( 1 - cofT \cdot (T - 25) \right) \cdot Dt$$

5. A sales price of electrical generation is calculated for each of the possible angles ($\beta_i$), based on the electricity sales price (PE) extracted from the electricity system market.

$$\overline{PIPV(Db)} = \overline{E(Db)} \cdot PE$$

6. Calculating a difference between the economic income accumulated up to the beginning of the calculation period and the economic income expected at the end of the interval.

$$PAPV = PRPV(t0) - PFPV(tf)$$

7. Calculating irradiance on the crop. To do so, the ground is divided into strips of width L. An irradiance level is associated with each of these strips depending on whether it is shaded by the solar panel or not. For an illuminated area (GSID), a function $f_c$ is applied, which can be that of directly applying global horizontal irradiance (GHI).

$$GSID(beta_i) = f_c(GHI, DHI, \beta_i, albedo)$$

For a shaded area (GSIL), a function $f_d$ is applied, which can be that of directly applying diffuse horizontal irradiance (DHI).

$$GSIL(beta_i) = f_d(GHI, DHI, \beta_i)$$

In both cases, the estimate can be made through a simulation, for example, through ray-tracing techniques that consider the ground albedo and the reflections on the panels.

8. Calculating an amount of irradiance on the crop. A matrix having i rows, with the possible $\beta_i$, and j columns, one for each strip of land, is determined. The function $f_e$ applies GSIL or GSID depending on whether the strip is shaded or not, for each of the possible angles.

$$\overline{GSI(Db)} = f_e\left(GSID(\beta_i), GSIL(\beta_i)\right)$$

$$\overline{\overline{GSI(Db)}} = \left(\overline{GSI(Db)}_1 \quad \overline{GSI(Db)}_2 \quad \overline{GSI(Db)}_j\right)$$

$$\overline{GSI(Db)}_j = \begin{pmatrix} GSI(beta_1) \\ GSI(beta_2) \\ GSI(beta_3) \\ .. \\ .. \\ GSI(beta_i) \end{pmatrix}$$

$$\overline{\overline{GSI(Db)}} = \begin{pmatrix} GSI(beta_1)_1 & GSI(beta_1)_2 & GSI(beta_1)_j \\ GSI(beta_2)_1 & GSI(beta_2)_2 & GSI(beta_2)_j \\ GSI(beta_i)_1 & GSI(beta_i)_2 & GSI(beta_i)_j \end{pmatrix}$$

9. Calculating the biological mass expected in each strip. For each strip of land, the impact on the generation of biological mass is calculated, based on the irradiance level obtained for that strip and for each of the possible angles. This calculation is carried out using a function ($f_g$), which is obtained through a spectrum usage graph (PAR) of the crop. The parameters of the graph will depend on each crop, and are affected by the level of ground moisture and the state of the biological cycle of the crop.

$$\overline{\overline{MBIO(Db)}} = \left(f_g(GSI(Db))_j\right)$$

$$MBIO(beta_i)_j = f(GSI(beta_i)_j)$$

$$\overline{\overline{MBIO(Db)}} = \begin{pmatrix} MBIO(beta_1)_1 & MBIO(beta_i)_2 & MBIO(beta_1)_j \\ MBIO(beta_2)_1 & MBIO(beta_i)_2 & MBIO(beta_2)_j \\ MBIO(beta_i)_1 & MBIO(beta_i)_2 & MBIO(beta_i)_j \end{pmatrix}$$

10. Calculating a difference in growth between each of the strips, determining a difference between the calculated biological mass and an accumulated historical value (MRBIO) in each strip, obtaining a matrix of differences $\overline{dif_j}$.

$$\overline{dif_j} = \left(\overline{MBIO\,(Db)}_j - MRBIO_j\right)$$

11. Calculating a heterogeneity exponent, based on the growth differences obtained. If the objective is plant homogeneity, this exponent is: +1 for negative differences and 0 for positive differences. These exponents will be modified based on the heterogeneity priority of the crop using the function $f_h$.

$$a_j = f_h(dif_j)$$

12. The exponent ($a_j$) is applied to each of the growth differences obtained, to obtain a range of imbalances for each angle $\beta_i$.

$$\overline{PHBIO\,(Db)} = \sum_j dif_j{}^{a_j}$$

13. Calculating a difference in the sales price of the crop, for each of the possible angles $\beta_i$, based on the sum of the calculated biological mass production and the expected sales price at the time of collection (PBIO), which is previously determined.

$$\overline{PIBIO\,(Db)} = PBIO \cdot \sum_j \overline{MBIO\,(Db)}_j$$

14. Calculating a difference between the economic income accumulated up to the beginning of the calculation period and the economic income expected at the end of the interval.

$$PABIO = PRBIO(t0) - PFBIO(tf)$$

15. Calculating a productivity factor (P) for the period ($\Delta$t) as the linear combination of the calculated factors to which a weight is assigned. These weights allow balancing the desired weight of each of the factors: instantaneous electrical production ($C_1$), accumulated electrical production ($C_2$), homogeneity of the crop ($C_3$), instantaneous production of the crop ($C_4$) and accumulated production of the crop ($C_5$).

In this case, to economically optimise both forms of production, a combination of parameters can be used: $C_1=C_4=1$ and the rest are null. To maximise photovoltaic production, $C_1=1$ can be used and the rest are 0. To maximise crop production, $C_4=1$ can be used and the rest are null. To maximise crop production, optimising photovoltaic profitability, $C_1=0$, $C_2=1$, $C_3=0$, $C_4=1$, $C_5=1$ can be used.

16. Determining an angle ($\beta_i$) that maximises the production factor obtained. Said angle, minus the orientation angle of the solar panel ($\theta$), determines the optimal angle ($\Delta\beta$). Based on the optimal angle determined, the accumulated values of actual production (PRV), the accumulated economic income of the crop (PRBIO), and the agricultural mass per strip (MRBIO) are updated.

17. The optimal orientation angle ($\Delta\beta$) is calculated for each instant, based on the sun's instantaneous position.

18. The actual angle is measured and compared with the optimal orientation angle ($\Delta\beta$) determined, so that if the difference exceeds a tolerance, a motor (19) is activated to change the orientation of the solar panel. On the contrary, if the difference does not exceed the tolerance, the orientation angle of the solar panel ($\theta$) is updated again with the solar position of each instant and it repeats comparing the actual angle with the optimal orientation angle ($\Delta\beta$) determined.

19. When the end of the calculation period is reached, the complete updated method is carried out again for a new calculation period.

The parameters used in the method of the invention are defined below:

$t_0$ = time at the initial instant of the interval
$t_f$ = time at the final instant of the interval
Dt = calculation interval
$\Delta b$ = range of possible tracker angles
$P_p$ = peak power of the plant
GHI = Global horizontal irradiance
DHI = Diffuse horizontal irradiance
T = Air temperature
PE = Instantaneous specific sales price of electricity ($€/kWh$)
PBIO = Expected specific sales price of the crop ($€/kg$)
BIF = Bifaciality of the PV module
POA = Global irradiance on the front surface of the PV module
GRI = Global irradiance on the rear surface of the PV module
cofT = thermal coefficient of the module in MPP
beta = angle of the solar tracker
$\theta$ = angle of the solar tracker oriented to the sun
$\Delta b$ = range of possible solar tracker angles
PFPV = Income expected for the PV installation accumulated up to the moment of time
PRPV = Actual income of the PV installation accumulated up to the moment of time
PIPV = Income factor of the PV installation in the time interval $\Delta t$
PAPV = Accumulated income factor of the PV installation
GSIL = global horizontal irradiance on illuminated ground
GSID = global horizontal irradiance on shaded ground
GSI = Irradiance on a strip of ground
MBIO = Produced biological mass of useful crop
PIBIO = Economic income from the crop for the period
L = width of a strip of land
PABIO = Economic income from the crop for the calculation period
PFBIO = Expected accumulated economic income from the crop
PRBIO = Historical accumulated economic income from the crop
PHBIO = production imbalance factor
$a_j$ = equilibrium coefficient
$C_i$ = weighting coefficient

## Claims

1. A method to determine an optimal orientation angle for solar panels located in crop fields, comprising the steps of:

- calculating producible electrical energy:

◦ obtaining weather forecast data, solar position data, peak power of the plant, an ambient temperature and a temperature coefficient of the solar panels;
◦ determining direct irradiance, rear irradiance and diffuse irradiance by simulating solar irradiance for a set of panel angles;
◦ determining an estimate of producible electrical energy for each angle by using a known function;

- calculating a producible mass in the crop:

- obtaining humidity and temperature measurements in the crop areas;
- determining a biological state of the crop based on biological indicators dependent on the type of crop;
- determining a crop irradiance limit;
- dividing the crop areas into a set of strips,
- determining shaded strips and unshaded strips for each of the strips through a simulation for a set of panel angles;
- determining an irradiance level for each strip through the simulation for a set of panel angles;
- determining a crop yield curve for each strip, establishing the humidity level and the biological state of the crop;
- determining a producible mass in each strip using the crop yield curve for a set of panel angles;

- determining an optimisation function that is a linear combination of the values of instantaneous and accumulated producible electrical energy and producible mass, weighted with a weighting coefficient $C_i$ that determines a degree of priority of crop production or solar production;
- determining an optimal orientation angle by maximising the optimisation function and establishing the condition that the irradiance on the crop is less than the crop irradiance limit; and
- applying the calculated orientation angle.

2. The method according to claim 1, wherein the step of determining an estimate of producible electrical energy is carried out using the expression:

$$\overline{E(Db)} = Pp \cdot \left(\overline{POA\,(Db)} + BIF \cdot \overline{GRI(Db)}\right) \cdot \left(1 - cofT \cdot (T - 25)\right) \cdot \Delta t$$

where $Pp$ is peak plant power, $\overline{POA}$ is the global irradiance on the front surface of the solar panel, $BIF$ is a parameter that depends on the bifaciality of the solar panel, $\overline{GRI}$ is the global irradiance on the rear surface of the solar panel, $cofT$ is a thermal coefficient of the solar panel, $T$ is the measured temperature and $\Delta t$ is the period of time that is analysed.

3. The method according to any of claims 1 to 2, wherein the solar panel is monofacial and the parameter $BIF$ is 0.

4. The method according to any of claims 1 to 3, wherein 5 weighting coefficients $C_i$ that assign weightings are set: instantaneous electrical production ($C_1$), accumulated electrical production ($C_2$), homogeneity of the crop ($C_3$), instantaneous production of the crop ($C_4$) and accumulated production of the crop ($C_5$).

5. The method according to any of claims 1 to 4, wherein in the step of determining an irradiance level for each strip through a simulation for a set of panel angles, data from ground albedo and reflections on the panels are included in the simulation.

6. The method according to any of claims 1 to 5, further comprising the steps of calculating a growth difference between each of the strips, determining a difference between the producible mass in each strip and an accumulated historical value (MRBIO) in each strip, and determining a heterogeneity exponent based on the growth difference and a previously determined heterogeneity priority.

7. The method according to claim 6, wherein it further comprises a step of determining a range of imbalances for each angle as the sum of the growth differences raised to the heterogeneity exponent.

8. The method according to any of claims 1 to 7, further comprising a step of iteratively varying the value of the weighting coefficients until a value of producible electrical energy or a value of producible mass in the previously determined crop are reached.

9. The method according to any of claims 1 to 8, further comprising a step of performing thermal modelling to avoid heat stress on the crops, changing the orientation angle of the panels to cast shade on the crops when the temperature exceeds a previously set limit value.

10. The method according to any of claims 1 to 9, wherein the biological indicators used in determining a biological state of the crop are selected from: the leaf area index, the stomatal index, the content of photosynthetic compounds, the content of phenolic compounds or the net assimilation ratio.

11. The method according to any of claims 1 to 10, wherein the spectrum of sunlight is divided into strips and the strips with longer wavelengths are intended for photovoltaic production and those with short wavelengths are intended for the crop.

12. An orientation control system for solar panels located in crop fields comprising:

   - a set of solar panels located over a crop;
   - a set of actuators connected to the solar panels to change their orientation;
   - at least one processing module configured to carry out the steps of the method according to any of claims 1 to 11, obtaining an optimal orientation angle for the solar panels,

   wherein the at least one processing module is connected and transmits the optimal orientation angle to the set of actuators.

13. The system according to claim 12, further comprising one or more sensors to obtain data from the solar panels and the crop, said sensors selected from: solar position sensors, peak plant power sensors, temperature sensors, humidity sensors and irradiance sensors.

14. A computer program configured to be run by the processing module of the system according to any of claims 12 to 13 and configured to carry out the steps of the method according to any of claims 1 to 11.

15. A computer-readable storage medium comprising the computer program of claim 14.

FIG. 1

FIG. 2

FIG. 3

FIG. 4

**Europäisches Patentamt**
**European Patent Office**
**Office européen des brevets**

## EUROPEAN SEARCH REPORT

Application Number

EP 23 38 3395

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/198693 A1 (AGRISOLEO [FR]) 19 October 2023 (2023-10-19) * paragraphs [0004], [0100], [0130] - [0260] * | 1-15 | INV. G06Q10/04 G06Q10/0631 G06Q50/02 A01G9/24 |
| Y | KAMRAN ALI KHAN NIAZI ET AL: "Comparative analysis of PV configurations for agrivoltaic systems in Europe", ARXIV.ORG, CORNELL UNIVERSITY LIBRARY, 201 OLIN LIBRARY CORNELL UNIVERSITY ITHACA, NY 14853, 1 November 2022 (2022-11-01), XP091357259, * page 5 - page 7; figure 5 * | 1-15 | G05D3/00 |
| A | FERNÁNDEZ EDUARDO F ET AL: "Global energy assessment of the potential of photovoltaics for greenhouse farming", APPLIED ENERGY, ELSEVIER SCIENCE PUBLISHERS, GB, vol. 309, 10 January 2022 (2022-01-10), XP086942382, ISSN: 0306-2619, DOI: 10.1016/J.APENERGY.2021.118474 [retrieved on 2022-01-10] * page 5 - page 8 * | 2,5,10, 11 | |
| | | | TECHNICAL FIELDS SEARCHED (IPC) |
| A | CAMPANA PIETRO ELIA ET AL: "Optimisation of vertically mounted agrivoltaic systems", JOURNAL OF CLEANER PRODUCTION, ELSEVIER, AMSTERDAM, NL, vol. 325, 22 September 2021 (2021-09-22), XP086845049, ISSN: 0959-6526, DOI: 10.1016/J.JCLEPRO.2021.129091 [retrieved on 2021-09-22] * page 14 * | 10 | A01G G05D F24S H02S G06Q |

-/--

The present search report has been drawn up for all claims

| Place of search | Date of completion of the search | Examiner |
|---|---|---|
| Munich | 21 May 2024 | Hopper, Eva |

EPO FORM 1503 03.82 (P04C01)

Europäisches
Patentamt

European
Patent Office

Office européen
des brevets

**EUROPEAN SEARCH REPORT**

Application Number

EP 23 38 3395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/364768 A1 (YOON SUNG [KR] ET AL) 17 November 2022 (2022-11-17) * paragraphs [0071], [0087] * ----- | 10 | |
| A | US 2017/126172 A1 (NOGIER ANTOINE [FR]) 4 May 2017 (2017-05-04) * paragraphs [0014] - [0016], [0097] - [0100] * ----- | 1,9,12, 14,15 | |

TECHNICAL FIELDS
SEARCHED     (IPC)

The present search report has been drawn up for all claims

| Place of search | Date of completion of the search | Examiner |
|---|---|---|
| Munich | 21 May 2024 | Hopper, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 38 3395

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2024

| Patent document cited in search report | Publication date | Patent family member(s) | | Publication date |
|---|---|---|---|---|
| WO 2023198693 A1 | 19-10-2023 | FR | 3134282 A1 | 13-10-2023 |
| | | WO | 2023198693 A1 | 19-10-2023 |
| US 2022364768 A1 | 17-11-2022 | NONE | | |
| US 2017126172 A1 | 04-05-2017 | AU | 2015237855 A1 | 10-11-2016 |
| | | CN | 106455496 A | 22-02-2017 |
| | | EP | 3122172 A1 | 01-02-2017 |
| | | ES | 2745329 T3 | 28-02-2020 |
| | | FR | 3019274 A1 | 02-10-2015 |
| | | HR | P20191643 T1 | 21-02-2020 |
| | | MA | 39791 A | 01-02-2017 |
| | | PL | 3122172 T3 | 31-12-2019 |
| | | PT | 3122172 T | 26-09-2019 |
| | | SI | 3122172 T1 | 31-12-2019 |
| | | US | 2017126172 A1 | 04-05-2017 |
| | | WO | 2015145351 A1 | 01-10-2015 |

EPO FORM P0459

For more details about this annex : see Official Journal of the European Patent Office, No. 12/82